# EUROPÄISCHE PATENTSCHRIFT

(11) **EP 1 893 122 B1**
(45) Veröffentlichungstag und Bekanntmachung des Hinweises auf die Patenterteilung: **12.09.2012**
(21) Anmeldenummer: 06762126.8
(22) Anmeldetag: 21.06.2006
(51) Int. Cl.: A61C 5/06

(54) **HANDGERÄT, INSBESONDERE FÜR DENTALE ZWECKE, ZUR ABGABE EINER PASTÖSEN FÜLLMASSE**
MANUAL DEVICE IN PARTICULAR FOR DENTAL PURPOSES FOR DISPENSING A PASTE-LIKE FILLER MASS
APPAREIL À MAIN, NOTAMMENT À USAGE DENTAIRE, POUR DISTRIBUER UNE MATIÈRE DE REMPLISSAGE PATEUSE

(30) Priorität: 22.06.2005 DE 102005028925
(43) Veröffentlichungstag der Anmeldung: 05.03.2008
(73) Patentinhaber: Kaltenbach & Voigt GmbH, 88400 Biberach (DE)
(72) Erfinder: MÖSSLE, Walter, 88441 Mittelbiberach (DE)
(74) Vertreter: Thun, Clemens
(86) Internationale Anmeldenummer: PCT/EP2006/005973
(87) Internationale Veröffentlichungsnummer: WO 2006/136398

(56) Entgegenhaltungen:
- WO-A-01/17454
- WO-A-2004/082508
- FR-A- 2 190 176
- FR-A1- 2 199 965
- US-A- 4 768 955
- US-A- 5 083 921
- US-A- 5 195 663
- US-A1- 2003 152 886
- US-A1- 2004 152 041

## Beschreibung

Die Erfindung betrifft ein Handgerät gemäß dem Oberbegriff des Anspruchs 1.

In der Medizintechnik ist es bekannt, Kavitäten in einem tierischen oder menschlichen Körperteil oder in einer Prothese mit einem Füllmaterial auszufüllen und somit zu reparieren, z. B. nach der spanabhebenden Ausarbeitung eines Defektes. Hierfür werden aushärtbare Füllmassen verwendet, die in einem pastösen oder flüssigen Zustand in die Kavität eingebracht werden und dann aushärten. Dabei ist zwischen einer direkten Füllung und einer indirekten Füllung zu unterscheiden. Bei einer direkten Füllung wird nur die Füllmasse in die Kavität eingebracht, so daß sie die Kavität ausfüllt. Bei einer indirekten Füllung wird ein vorzugsweise angepaßtes Inlay-Einlegeteil mit der Füllmasse in die Kavität eingesetzt, so daß letzteres das Einlegeteil mit der Wandung der Kavität verbindet. Hierbei ist nicht nur eine mechanische Verankerung der Füllmasse in der Kavität wichtig, sondern auch eine dichte Aufnahme der Füllmasse in der Kavität, um Spalte zu vermeiden, durch die hindurch Verunreinigungen und Keime eindringen können, die bei einem Körpergewebe zu Entzündungen führen und die Präparation zerstören können.

Ein typischer Anwendungsfall einer vorbeschriebenen Präparation, bei der besondere Anforderungen bezüglich des Handgerätes und dessen Handhabung bestehen, ist die Zahnpräparieung im Mundraum eines Patienten oder eines Übungskopfes für Lernzwecke. Bei einem solchen dentalmedizinischen Behandlungsfall bestehen besondere Anforderungen bezüglich der Konstruktionsgröße des Handstücks, da der Mundraum eines Patienten verhältnismäßig klein ist und deshalb unter Berücksichtigung einer erforderlichen Sichtfreiheit eine möglichst kleine Konstruktionsgröße anzustreben ist.

In der DE 100 01 513 A1 sind ein Verfahren zum Füllen einer Zahn-Füllmasse auf Kunstharzbasis in eine Kavität eines Zahnes und ein Handgerät zur Durehführung eines solchen Verfahrens beschrieben, wobei während des Füllens mit Schall, insbesondere mit Ultraschall auf die Füllmasse und eine Düse des Handgerätes eingewirkt wird und das Handgerät Mittel aufweist, welche die Füllmasse aus einem Vorratsbehälter der Düse fördern. Dieses bekannte Verfahren und Handgerät ermöglicht es, Füllmassen mit einem verhältnismäßig hohen Gehalt an Füllstoffen zu verwenden, die die Zähigkeit der Füllmasse vergrößern und dabei das Schrumpfen und die Gefahr einer Spaltbildung beim Aushärten verringern. Bei diesem vorbekannten Handgerät ist eine Hebeleinrichtung zum Fördern der Füllmasse vorgesehen, die bei ihrer manuellen Betätigung zugleich eine Ultraschallquelle, insbesondere einen Piezoschwinger, einschaltet, die bzw. der im hinteren Bereich des Handgerätekörpers angeordnet ist. Die Füllmasse ist in einer Kartusche angeordnet, die in einen im vorderen Endbereich des Handgerätekörpers angeordneten Ausschnitt einsetzbar und fixierbar ist. Beim manuellen Betätigen der Hebeleinrichtung wird die Füllmasse durch einen mit der Hebeleinrichung verbundenen und auf das hintere Ende der Kartusche einwirkenden Vorschubstempel herausgefördert.

Aus der EP 0 480 472 B1 ist ein Verfahren zur Herstellung von Dentalmassen zu entnehmen, die ein Bindemittel oder einen so hohen Anteil an Füllstoffen enthalten, daß die Dentalmasse an sich für den vorgesehenen Verwendungszweck aufgrund ihrer hohen Viskosität nicht einsetzbar ist, wobei man jedoch die Füllstoffe mit dem Bindemittel unter Einwirkung einer Schwingung im Frequenzbereich von 20 Hz bis 50 kHz mit einer Amplitude von 1 µm bis 5 µm vermischt, wodurch die Viskosität auf einen einsetzbaren Wert vermindert wird.

Der Erfindung liegt die Aufgabe zugrunde, ein Handgerät nach dem Oberbegriff des Anspruchs 1 bezüglich seines Antriebs zu vereinfachen.

Diese Aufgabe wird durch die Merkmale des Anspruchs 1 gelöst. Vorteilhaft Weiterbildungen der Erfindung sind in zugehörigen abhängigen Ansprüchen beschrieben.

Bezüglich der Ausgestaltung nach Anspruch 1 liegt der Erfindung die Erkenntnis zugrunde, daß zwei Antriebsfunktionen vorhanden sind, nämlich zum einen die des Schwingungsgenerators und zum anderen die des Druckmittels.

Bei der erfindungsgemäßen Ausgestaltung nach Anspruch 1 weisen die Druckerzeugungsmittel einen auf die Füllmasse einwirkenden pneumatisch beaufschlagbaren Druckkolben auf, wobei eine gemeinsame Druckversorgung für einen pneumatisch antreibbaren Schwingungsgenerator und die Druckerzeugungsmittel vorgesehen ist. Hierdurch ist nicht nur ein wirksamer und leistungsfähiger Antrieb vorgesehen, sondern auch ein einfacher Antrieb, weil für beide Antriebsfunktionen die gemeinsame pneumatische Druckversorgung zur Verfügung steht. Außerdem läßt sich der pneumatische Druck durch eine oder zwei Druckleitungen bei einfacher Konstruktion zuführen.

Nachfolgend werden vorteilhafte Ausgestaltungen und Weiterbildungen der Erfindung anhand von bevorzugten Ausführungsbeispielen und vereinfachten Zeichnungen näher erläutert. Es zeigt:
- Fig. 1: ein nicht beanspruchtes Handgerät im Längsschnitt;
- Fig. 2: ein erfindungsgemäßes Handgerät im Längsschnitt;
- Fig. 3: einen Behälter für das Handgerät zur Aufnahme von einer pastösen Füllmasse im Längsschnitt;
- Fig. 4: eine alternative Ausfühsrungsform einer Behälters in Seitenansicht.

Die Hauptkomponenten des in seiner Gesamtheit mit 1 bezeichneten Handgerätes sind ein länglicher, insbesondere stabförmiger, und beim Ausführungsbeispiel sich gerade erstreckender Geräteschaft 2, der wenigstens in seinem vorderen Bereich hohl, vorzugsweise hülsenförmig, ausgebildet ist und in dem ein Schwingungsgenerator 3 angeordnet ist, der mit einem Behälter 4 zur Aufnahme einer pastösen Füllmasse in Verbindung steht, deren Viskosität durch Zuführung von Schwingenergie reduzierbar ist, und die im weiteren noch beschrieben wird. Der Behälter 4 ist mit dem Schwingungsgenerator 3 fest verbunden und somit in der Lage, die ihm vom Schwingungsgenerator 3 übertragene Schwingungsenergie aufzunehmen und Schwingungen auszuführen. Hierbei kann es sich um Schwingungen handeln, deren Amplituden in einander entgegengesetzten Richtungen, z. B. in der Längsrichtung des Schaftes 2 oder quer dazu, oder in viele Richtungen und somit räumlich verlaufen.

Dabei ist der Behälter 4 unabhängig vom ein Gerätegehäuse 5 für den Schwingungserreger 3 bildenden Schaft gelagert, so daß er auch die Schwingungen unabhängig vom Gehäuse 5 bzw. Schaft 4 ausführen kann. Dies läßt sich dadurch erreichen, daß der Behälter 4 fest mit einem Schwingteil 6 verbunden ist, auf das der Schwingungsgenerator 3 die von ihm aufgebrachte Schwingungsenergie überträgt.

Das Schwingteil 6 ist bei diesem Handgerät ein länglicher Schwingschaft, der sich längs im Geräteschaft 2 und mit seinem vorderen Ende in den vorderen Bereich des Geräteschaftes 2 erstreckt. Der Behälter 4 ist vorzugsweise ebenfalls länglich ausgebildet und mit seinem hinteren Ende durch eine Verbindungsvorrichtung 7 lösbar mit dem vorderen Ende des Schwingteils 6 verbunden. Hierzu kann der Geräteschaft 2 ein Aufnahmeloch 8 aufweisen, durch dessen vordere Öffnung hindurch das Schwingteil 6 sich erstreckt und z. B. den Geräteschaft 2 nach vorne überragt, oder das Schwingteil 6 kann vor dem vorderen Endes Schwingteils 6 enden. In beiden Fällen ist das Schwingteil 6 zur Verbindung mit dem Behälter 4 für diesen von vorne zugänglich, so daß der Behälter 4 mit dem Schwingteil 6 verbindbar ist, und dabei gegebenenfalls durch die Öffnung 8 einführbar ist.

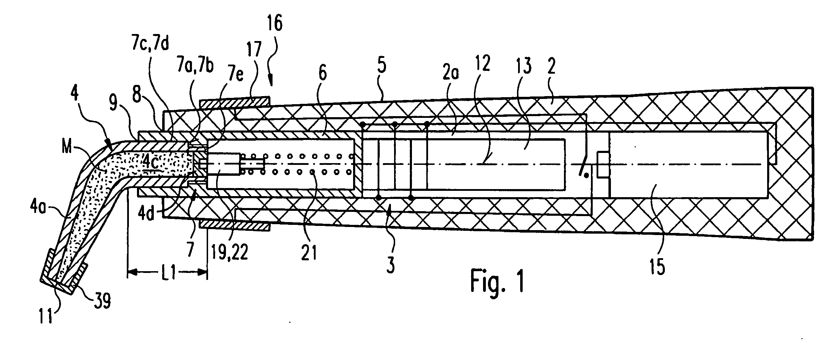

Um die vom Schwingungsgenerator 3 aufgebrachte Schwingungsleistung möglichst verlustlos auf den Behälter 4 und die darin befindliche Füllmasse zu übertragen, ist die Verbindungsvorrichtung 7 spielfrei. Dies läßt sich dadurch erreichen, daß die Verbindungsteile, nämlich das Schwingteil 6 und der Behälter 4, in der Längsrichtung und quer dazu flächig und in wenigstens einer Richtung fest aneinander anliegen. Die Verbindungsvorrichtung 7 ist vorzugsweise eine Schraubverbindung. Beim Handgerät nach Fig. 1, bei dem der Behälter 4 in ein Aufnahmeloch 9 des Schwingteils 6 einführbar und verschraubbar ist, kann der Behälter 4 mit einer etwa radialen Schulterfläche 7a an einer Gegenschulterfläche 7b des Schwingteils 6 und mit einer Umfangsfläche an einer Gegenumfangsfläche des Schwingteils 6 unter der Gewindespannung anliegen und mit seiner Umfangsfläche 7c an einer durch die Innenmantelfläche des Lochs 9 gebildeten Gegenumfangsfläche 7d des Schwingteils 6 anliegen. Die starre Anlage kann aber auch durch axial nach innen konvergente und zueinander passende Konusflächen am Außenumfang des Behälters 4 und am Innenumfang des Schwingteils 6 realisiert sein, die die starre Verbindung sowohl in axialer als auch in radialer Richtung gewährleisten. Der Behälter 4 weist an seinem hinteren Ende einen nach hinten abstehenden Gewindezapfen 7e auf, der in die Schraubverbindung einschraubbar ist.

Der Behälter 4 kann durch einen sich in der Längsrichtung gerade erstreckenden Hülsenkörper gebildet sein, der an seinem vorderen Ende eine Auslaßöffnung 11 für die Füllmasse M aufweist. Um die Zugänglichkeit zur Behandlungsstelle zum einen ergonomisch und zum anderen unter Berücksichtigung einer guten Sicht zu verbessern, ist der Behälter 4 in seinem vorderen Endbereich als eine sich nach vorne verjüngende Kanüle 4a ausgebildet, die sich z. B. gekrümmt oder gerade und bezüglich der Längsmittelachse 12 des Geräteschaftes 2 quer , z. B. schräg nach vorne, erstreckt und - längs der Längsmittelachse 12 gesehen - den Umfang des Geräteschaftes 2 überragt.

Der Schwingungsgenerator 3 kann am hinteren Ende des vorzugsweise zylindrischen und hohlen Schwingteils 6 angeordnet sein. Es kann sich z. B. um einen elektrischen Schwingungsgenerator 3, insbesondere um einen Piezo-Schwingungsgenerator 3, handeln. Es eignet sich jedoch auch ein pneumatischer Schwingungsgenerator 3 vorzüglich, der mit Druckluft betreibbar ist, die durch eine Zuführungsleitung zuführbar ist, die sich von hinten zum Schwingungsgenerator 3 erstreckt.

Durch einen Piezo-Schwingungsgenerator 3 lassen sich Schwingungen erzeugen, deren Amplituden einander entgegengesetzte Richtungen haben, die z. B. in der Längsrichtung der Längsmittelachse 12 verlaufen. Im Rahmen der Erfindung kann die Richtung der Amplituden jedoch auch quer zur Längsmittelachse 12, z. B. radial, gerichtet sein.

Wie es Fig. 1 zeigt, kann der Schwingungsgenerator 3 zwischen dem Schwingteil 6 und einem Gegenschwingteil 13 angeordnet sein, das sich ebenfalls im Hohlraum 2a des Geräteschaftes 2 befindet, wobei der Schwingungsgenerator 3 ein das Schwingteil 6 und das Gegenschwingteil 13 miteinander verbindendes Verbindungsglied bildet. Zur radialen Lagerung des z. B. zylindrischen Schwingteils 6 kann im Geräteschaft 2 ein z. B. zylindrisches Aufnahmeloch 8 angeordnet sein, in dem das Schwingteil 6 mit geringem radialen Bewegungsspiel gelagert ist. Zur axialen Positionierung des Schwingteils 6 sind nicht dargestellte Positionierelemente vorgesehen. Im Bereich des Schwingungsgenerators 3 und insbesondere im Bereich des Gegenschwingteils 13 ist der Hohlraum 2a des Geräteschaftes 2 größer ausgebildet als der Schwingungsgenerator 3 und/oder das Gegenschwingteil 13.

Im hinteren Bereich des Geräteschaftes 2 kann eine Energiequelle 15 angeordnet sein, z. B. eine Batterie, insbesondere ein zum Aufladen von außen zugänglicher Akkumulator, die durch elektrische Leitungen mit dem Schwingungsgenerator 3 und einer in ihrer Gesamtheit mit 16 bezeichneten Steuereinrichtung zum Verändern und Einstellen der vom Schwingungsgenerator 3 auf den Behälter 4 bzw. die Füllmasse M übertragbaren Schwingungsenergie verbunden ist. Zum Verändern der Schwingungsenergie weist die Steuereinrichtung 16 ein bewegbar gelagertes Einstell-bzw. Steuerelement 17 auf, das Teil einer bezüglich dem Handgerät 1 externen Steuereinrichtung sein kann und z. B. an einem Fußschalter angeordnet sein kann, oder am Geräteschaft 2 bewegbar gelagert ist. Bei diesem Handgerät ist das Steuerelement 17 im vorderen Endbereich des Geräteschaftes 2 an dessen Umfang angeordnet und längs der Längsmittelachse 12 oder quer dazu bewegbar, z. B. in der Umfangsrichtung. Dabei kann das Steuerelement 17 ein Ringelement sein, wie es Fig. 1 beispielhaft zeigt. Durch eine Bewegung und Rückbewegung des Steuerelementes 17 läßt sich die übertragbare Schwingungsenergie wahlweise vergrößern und verringern.

Bei der Füllmasse M handelt es sich um ein Füllmaterial zum Füllen von Kavitäten des menschlichen oder tierischen Körpers, insbesondere um eine Füllmasse auf Kunstharzbasis, z. B. mit einem mit ultraviolettem Licht aushärtbaren Kunstharz, wie es z. B. bei dentalen Füllmassen M bekannt ist. Um beim Aushärten eine Volumenverringerung der Füllmasse M durch Schwinden zu verringern, enthält der Kunstharz eingemischte anorganische Materialien z. B. in Pulverform. Je höher der Gehalt der Füllmasse M an einem solchen anorganischen Material ist, desto größer ist die Zähigkeit bzw. Viskosität der Füllmasse M und desto geringer ist das beim Aushärten auftretende Schwindmaß. Durch die Beaufschlagung der Füllmasse M mit Schwingungsenergie wird die Viskosität der Füllmasse M verringert, so daß sie in der Lage ist, durch die Auslaßöffnung 11 aus dem Behälter 4 auszutreten und die Kavität zu füllen sowie auch kleine Ecken der Kavität auszufüllen.

Dabei ermöglicht es die erfindungsgemäße Steuereinrichtung 16 nicht nur die Konsistenz bzw. Viskosität der Füllmasse M, sondern auch deren aus der Auslaßöffnung 11 austretende Fördermenge an örtliche Erfordernisse anzupassen, z. B. an unterschiedliche Formen und/oder Größen der jeweiligen Kavität. Um eine Kavität engen Querschnitts oder mit kleinen Ecken oder Spalten auszufüllen, läßt sich die Viskosität der Füllmasse M durch eine Vergrößerung der Schwingungsleistung verringern. Außerdem läßt sich die jeweils gewünschte Fördermenge und somit der Füllvorgang an örtliche Erfordernisse anpassen. Für große Kavitäten läßt sich die Fördermenge vergrößern und für kleine Kavitäten verringern. Beim Ausführungsbeispiel nach Fig. 1 ist es vorteilhaft, die Viskosität der Füllmasse M, den von einem Drückhalben 22 auf die Füllmasse M ausgeübten Druck, die Schwingungsleistung und die Größe der Auslaßöffnung 11 so aufeinander abzustimmen, daß bei ausgeschaltetem Schwingungsgenerator 3 die Füllmasse M nicht aus dem Behälter 4 austritt und somit darin verbleibt und erst bei eingeschaltetem Schwingungsgenerator 3 mit einer geringen Fördermenge aus der Auslaßöffnung 11 austritt, wobei diese Fördermenge durch eine Vergrößerung der Schwingungsleistung wahlweise vergrößert und wieder verringert werden kann.

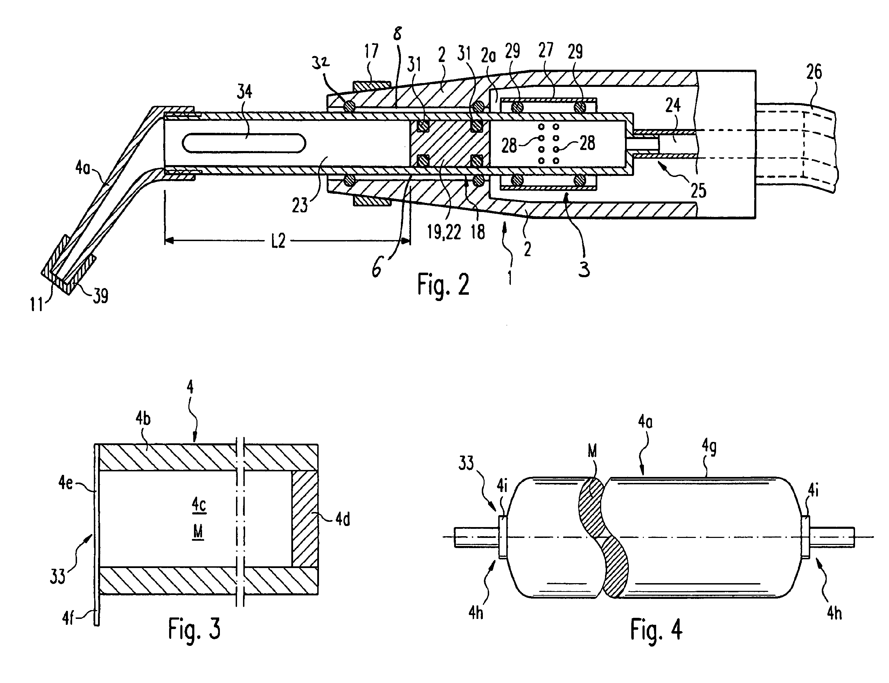

Das erfindungsgemäße Ausführungsbeispiel nach Fig. 2, bei dem gleiche oder vergleichbare Teile mit gleichen Bezugszeichen versehen sind, unterscheidet sich vom vorbeschriebenen Handgerät in mehrfacher Hinsicht.

Auch beim erfindungsgemäßen Ausführungsbeispiel ist die Druckvorrichtung 18 in das Schwingteil integriert, wobei sie ein Druckelement 19 in der Form eines pneumatisch beaufschlagbaren Druckkolbens 22 aufweist, der einen im Schwingteil 6 angeordneten und vorderseitig offenen Aufnahmeraum 23 für die Füllmasse M nach hinten begrenzt und rückseitig mit einem pneumatischen Druck beaufschlagbar ist. Der Druck kann durch eine sich von hinten zum hülsenförmigen Schwingteil 6 erstreckende pneumatische Druckleitung 24 zuführbar sein, die z. B. am rückseitigen Ende des Schwingteils 6 daran angeschlossen ist, z. B. mittels einer Leitungsverbindung 25, die durch eine Rohr- oder Schlauchverbindung gebildet sein kann. Bei diesem Ausführungsbeispiel ist das Handgerät 1 rückseitig vorzugsweise durch eine biegsame Versorgungsleitung 26 mit einem nicht dargestellten sogenannten Versorgungsgerät verbunden, das eine Druckquelle aufweist, von der sich längs durch die Versorgungsleitung 26 die Druckleitung 24 erstreckt.

Außerdem ist ein pneumatischer Schwingungsgenerator 3 vorgesehen, der hinter dem Hubbereich des Druckkolbens 22 angeordnet ist und durch eine Schwinghülse 27 gebildet sein kann, die das Schwingteil 6 mit radialem Abstand umgibt, wobei im Längsbereich der Schwinghülse 27 eine Mehrzahl radialer Löcher 28 im Schwingteil 6 angeordnet ist. Die Schwinghülse 27 ist in der Längsrichtung des Schwingteils 6 durch geeignete Mittel positioniert oder begrenzt. Diese können durch auf dem Schwingteil axial fixiert sitzende Begrenzungsringe 29 gebildet sein, bei denen es sich z. B. durch elastisches Klemmen auf dem Schwingteil 6 sitzende Ringe aus elastischem Material, z. B. Kunststoff oder Gummi, handeln kann.

Der Druckkolben 22 ist vorzugsweise durch wenigstens einen z. B. zwei einen axialen Abstand voneinander aufweisende Dichtringe 31 im Schwingteil 6 abgedichtet, wobei der oder die Dichtringe 31 jeweils in einer Ringnut im Druckkolben 22 aufgenommen sind.

Auch bei diesem Ausführungsbeispiel kann der Schwingungsgenerator 3 im Schwingungsbetrieb mit Amplituden schwingen, die in einander gegenüberliegende Achsrichtungen und/oder Radialrichtungen des Schwingteils gerichtet sind, wobei es sich um einen hierfür geeigneten Schwingungsgenerator 3.

Bein dem pneumatischen Schwingungsgenerator 3, werden auf das Schwingteil 6 hauptsächlich radiale Schwingamplituden erzeugt, die jedoch auch von axialen Schwingamplituden überlagert sind, so daß sich für das Schwingteil 6 räumliche Schwingamplituden ergeben. Darauf kann das Schwingteil 6 mit radialen als auch axialen und auch mit Kippbewegungen reagieren, die beim Ausführungsbeispiel gemäß Fig. 2 insbesondere deshalb möglich sind, weil das Schwingteil 6 radial elastisch nachgiebig im Geräteschaft 2 gelagert ist, z. B. mittels eines oder zwei einen axialen Abstand voneinander aufweisenden Lagerringen 32 aus elastisch komprimierbarem Material, insbesondere Gummi oder Kunststoff, von denen der gegebenenfalls vorhandene hintere Lagerring 32 vorzugsweise vor dem Schwingungsgenerator 3 angeordnet ist. Die Lagerringe 32 können jeweils in einer Ringnut gehalten sein, die sich z. B. in der Innenumfangsfläche des ringförmigen Geräteschaftes 2 befindet. Zwischen dem Schwingteil 6 und der Wandung des Aufnahmeloches 8 des Geräteschafts ist ein radiales Bewegungsspiel vorgesehen, das die Schwingbewegungen des Schwingteils 6 ermöglicht.

Es ist zwar möglich, jedoch nicht erforderlich und aus Gründen einer einfachen Besichtung vorteilhaft, die Füllmasse M nicht direkt in die Aufnahmeraum 23 einzugeben, sondern in diesen passende und mit der Füllmasse M gefüllte Behälter 4, sogenannte Kartuschen, einzusetzen, aus denen die Füllmasse M durch eine Vorbewegung des Druckkolbens 22 nach vorne ausdrückbar ist. Diese Behälter 4 weisen an ihren vorderen Enden deshalb eine Austrittsöffnung 33 auf, die z. B. zum Einsatz in den Aufnahmeraum 23 geöffnet wird oder unter dem vom Druckkolben 22 aufgebrachten Druck selbsttätig öffnet, z. B. an einer Schwachstelle.

Der Behälter 4 läßt sich von vorne in das hülsenförmige Schwingteil 6 einschieben. Beim Ausführungsbeispiel gemäß Fig. 2, bei dem eine Kanüle 4a mit dem Schwingteil 6 lösbar verbunden ist, vorzugsweise durch eine Schraubverbindung, insbesondere durch Aufschrauben, wird die Kanüle 4a vor einem Einsetzen des Behälters 4 gelöst und danach wieder montiert. Die Form der Kanüle 4a kann der beim Ausführungsbeispiel gemäß Fig. 1 beschriebenen Konstruktion entsprechen.

Das Schwingteil 6 kann vor dem Geräteschaft 2 auf einer oder auf beiden Seiten ein vorzugsweise längliches Sichtfenster 34 aufweisen, das es ermöglicht, die Kapazität der Füllmasse M, insbesondere bei einer Ausgestaltung in Form eines Schlauchbeutels gemäß Fig. 4, zu erkennen.

Beim Ausführungsbeispiel gemäß Fig. 2 kann das Steuerelement 17 dazu dienen, den Schwingungsgenerator 3 und den Druckkolben 22 gleichzeitig und gemeinsam mit dem Druckfluid der Druckleitung 24 zu beaufschlagen. Ein in diesem Fall zugehöriges gemeinsames Ventil in der Druckleitung 24 kann im Bereich des Handgerätes 1 oder im Bereich des vorbeschriebenen nicht dargestellten Versorgungsgerätes angeordnet sein.

Beim Ausführungsbeispiel gemäß Fig. 2 ist die Viskosität der Füllmasse M unter Berücksichtigung der Querschnittsgröße der Auslaßöffnung 11 vorzugsweise so groß, daß sie bei nicht eingeschalteter Druckvorrichtung 18 und nicht eingeschaltetem Schwingungsgenerator 3 nicht durch die Auslaßöffnung 11 aus dem Behälter 4 bzw. der Kanüle 4a ausläuft und somit im Schwingteil 6 verbleibt.

Im Rahmen der Erfindung kann die Viskosität so groß sein, daß bei eingeschalteter Druckvorrichtung 18 die Füllmasse M durch die Auslaßöffnung 11 herausgedrückt wird. Die Druckvorrichtung 18 kann somit dazu benutzt werden, das Füllmaterial M aus dem Geräteschaft 2 zu fördern. Durch einen zusätzlich einschaltbaren Schwingungsgenerator 3 läßt sich dann die Viskosität vermindern und die Fördermenge vergrößern. Wenn darüber hinaus die Schwingungsleistung des Schwinggenerators 3 einstellbar, nämlich vergrößerbar und wieder verringerbar ist, läßt sich die Viskosität weiter vermindern sowie wieder vergrößern und die Fördermenge vergrößern und wieder vermindern.

Bei beiden Handgeräten gemäß Fig. 1 und 2 weist der Behälter 4 eine Umfangswand 4b auf, die wenigstens in einem hinteren Längsabschnitt einen prismatischen, insbesondere zylindrischen Aufnahmeraum 4c umgibt, der durch einen vom hinteren Ende her eingeschobenen Kolbendeckel 4d passender Querschnittsform geschlossen ist.

Beim Ausführungsbeispiel nach Fig. 3 ist die Umfangswand 4b eine hohlzylindrische Wand, die an ihrem vorderen Ende durch eine dünne Stirnwand 4e, insbesondere eine Folie, z. B. aus Metall oder Kunststoff, verschlossen ist. Die Stirnwand 4e kann z. B. mit der Stirnfläche der Umfangswand 4b verklebt sein. An wenigstens einer Seite kann die Stirnwand 4e die Umfangswand 4b seitlich überragen. Ein so gebildeter Griffrand 4f kann dazu dienen, die Stirnwand 4e abzureißen und somit den Behälter 4 für eine Benutzung an seinem vorderen Ende zu öffnen. Eine Öffnung kann jedoch auch dadurch geschaffen werden, daß die Stirnwand durchstochen wird. Dies kann auch bei einem Behälter 4 und Schlauchbeutel gemäß Fig. 4 erfolgen.

Die Außenquerschnittsabmessung der Umfangswand 4b ist unter Berücksichtigung eines hinreichenden Bewegungsspiels an die Querschnittsabmessung des in diesem Fall zylindrischen Aufnahmeloches 9 angepaßt, so daß der Behälter 4 darin von vorne einschiebbar ist.

Beim Ausführungsbeispiel nach Fig. 4, bei dem gleiche oder vergleichbare Teile ebenfalls mit gleichen Bezugszeichen versehen sind, ist der Behälter 4 durch einen Schlauchbeutel 4g gebildet, der an einem oder an beiden Enden durch einen Verschluß 4h verschlossen ist, der durch ein ringförmiges Einschnürungsteil 4i gebildet sein kann, der einen Endabschnitt des Schlauches des Schlauchbeutels 4g umgibt und im Sinne einer Einschnürung zusammendrückt. Auch bei diesem Ausführungsbeispiel ist die Querschnittsform und -abmessung des Schlauchbeutels 4g an die Querschnittsabmessung des Aufnahmeloches 9 so mit einem Bewegungsspiel angepaßt, daß der Schlauchbeutel 4g in das Schwingteil 6 gemäß Fig. 2 einschiebbar ist. Aufgrund der Nachgiebigkeit der pastösen Füllmasse M kann die Querschnittsabmessung des Schlauchbeutels 4g aber auch geringfügig größer sein. Da sich der Schlauchbeutel 4g quer zusammendrücken läßt, ist er an die Querschnittsabmessung des Aufnahmeloches 9 anpaßbar.

Beim Handgerät nach Fig. 1 ist die Länge L1 des sich gerade erstreckenden Längsabschnitts des Aufnahmeraums 4c bzw. des sich gerade erstreckenden hinteren Längsabschnitts der Umfangswand 4b an die Tiefe des Aufnahmeloches 9 angepaßt. Bei dem Ausführungsbeispiel nach Fig. 2 und 3 sind die Gesamtlängen der Behälter 4 an die vorhandene Länge L2 des Aufnahmeraumes 23 im Schwingteil 6 angepaßt, die durch den Abstand des Druckkolbens 22 vom vorderen Ende des hülsenförmigen Schwingteils 6 vorgegeben ist.

Im Gegensatz zu üblichen bei Fugenabdichtungs-Geräten bekannten Kartuschen ist beim erfindungsgemäßen Behälter 4 die Umfangswand 4b nicht nur wesentlich dicker bemessen, sondern sie besteht auch aus einem schallharten Material, das sich für eine Übertragung eines Körperschalls durch die Umfangswand 4b auf das Füllmaterial M gut eignet. Aus einem solchen Material besteht auch der Kolbendeckel 4d. Als ein solches schallhartes Material eignet sich ein Metall, insbesondere Leichtmetall wie Aluminium, oder Kunststoff wegen eines angestrebten geringen Gewichtes gut.

Bei allen Ausführungsbeispielen ist es vorteilhaft, die Auslaßöffnung 11 durch einen Verschluß zu verschließen, der z. B. durch eine Verschlußkappe 39 gebildet sein kann, die auf das z. B. als Kanüle 4a ausgebildete vordere Ende des Behälters 4 lösbar aufgesteckt ist.

## Patentansprüche

1. Handgerät (1), insbesondere für dentale Zwecke, zur Abgabe einer pastösen Füllmasse (M), deren Viskosität durch Zuführung von Schwingungsenergie reduzierbar ist,
mit einem Gerätegehäuse (5),
mit einem Behälter (4) für die pastöse Füllmasse (M),
mit einer mit dem Behälter (4) in Verbindung stehenden Austrittsdüse (11),
mit einem Schwingungsgenerator (3),
und mit Druckerzeugungsmitteln (18) zum Ausüben von Druck auf die pastöse Füllmasse (M),
wobei der Schwingungsgenerator (3) mit pneumatischem Druck betreibbar ist,
**dadurch gekennzeichnet,**
**daß** die Druckerzeugungsmittel (18) einen auf die Füllmasse (M) einwirkenden pneumatisch beaufschlagbaren Druckkolben (22) aufweisen und eine gemeinsame Druckversorgung für einen pneumatisch antreibbaren Schwingungsgenerator (3) und die Druckerzeugungsmittel (18) vorgesehen ist.

2. Handgerät nach Anspruch 1,
**dadurch gekennzeichnet,**
**daß** zwischen dem Behälter (4) und dem Schwingungsgenerator (3) ein Schwingteil (6) schwingungsgekoppelt angeordnet ist.

3. Handgerät nach Anspruch 2,
**dadurch gekennzeichnet,**
**daß** das Schwingteil (6) axial und/oder radial oder räumlich schwingbar im Gerätegehäuse (5) gelagert ist.

4. Handgerät nach Anspruch 2 oder 3,
**dadurch gekennzeichnet,**
**daß** das Schwingteil (6) einen von vorne zugänglichen Aufnahmeraum (23) für den Behälter (4) aufweist.

5. Handgerät nach einem der Ansprüche 2 bis 4,
**dadurch gekennzeichnet,**
**daß** der Behälter (4) mit dem vorderen Ende des Schwingteils (6) lösbar verbunden ist.

6. Handgerät nach einem der Ansprüche 2 bis 5,
**dadurch gekennzeichnet,**
**daß** der Behälter (4) durch eine Schraubverbindung mit dem Schwingteil (6) verbunden ist.

7. Handgerät nach einem der Ansprüche 2 bis 6,
**dadurch gekennzeichnet,**
**daß** das Schwingteil (6) das Gerätegehäuse (5) nach vorne überragt.

8. Handgerät nach einem der Ansprüche 2 bis 7,
**dadurch gekennzeichnet,**
**daß** der Druckkolben (22) in einem nach vorne offenen Aufnahmeraum (23) des Schwingteils (6) verschiebbar gelagert ist, wobei die Füllmasse (M) oder der Behälter (4) von vorne in den Aufnahmeraum (23) einbringbar ist.

9. Handgerät nach Anspruch 8,
**dadurch gekennzeichnet,**
**daß** der pneumatisch antreibbare Schwingungsgenerator (3) eine auf dem Schwingteil (6) schwingbar gelagerte Schwinghülse (27) aufweist, der der pneumatische Druck vom hinter dem Druckkolben (22) angeordneten Innenraum des Schwingteils (6) zuführbar ist.

10. Handgerät nach einem der vorherigen Ansprüche,
**dadurch gekennzeichnet,**
**daß** der Schwingungsgenerator (3) auf seiner einen Seite mit dem Behälter (4) und auf seiner anderen Seite mit einem Gegenschwingungskörper (13) schwingungsgekoppelt ist.

11. Handgerät nach einem der vorherigen Ansprüche,
**gekennzeichnet durch**
Einstellmittel zum Einstellen der auf den Behälter (4) zu übertragenden Schwingungsenergie.

12. Handgerät nach Anspruch 11,
**dadurch gekennzeichnet,**
**daß** die Einstellmittel ein bewegbar angeordnetes Steuerelement (17) aufweisen, das vorzugsweise am Handgerät (1) angeordnet ist, insbesondere am Umfang des vorderen Bereichs des Geräteschaftes (2).

## Claims

1. Hand apparatus (1), in particular for dental purposes, for dispensing a pasty filler mass (M), the viscosity of which can be reduced by supplying vibration energy,
having an apparatus housing (5),
having a container (4) for the pasty filler mass (M), having an exit nozzle (11) communicating with the container (4),
having a vibration generator (3),
and having pressure-production means (18) for exerting pressure on the pasty filler mass (M),
wherein the vibration generator (3) is operable with pneumatic pressure,
**characterised in that**
the pressure-production means (18) have a pressure piston (22), which can be acted upon pneumatically, acting on the filler mass (M), and a common pressure supply is provided for a pneumatically drivable vibration generator (3) and the pressure-production means (18).

2. Hand apparatus according to claim 1,
**characterised in that**
an oscillation part (6) is arranged to be vibration-coupled between the container (4) and the vibration generator (3).

3. Hand apparatus according to claim 2,
**characterised in that**
the oscillation part (6) is mounted to be axially and/or radially or three-dimensionally oscillatable in the apparatus housing (5).

4. Hand apparatus according to claim 2 or 3,
**characterised in that**
the oscillation part (6) has a receiving chamber (23) for the container (4) that is accessible from the fore.

5. Hand apparatus according to one of claims 2 to 4,
**characterised in that**
the container (4) is connected releasably to the forward end of the oscillation part (6).

6. Hand apparatus according to one of claims 2 to 5,
**characterised in that**
the container (4) is connected to the oscillation part (6) by a screw connection.

7. Hand apparatus according to one of claims 2 to 6,
**characterised in that**
the oscillation part (6) projects forwardly beyond the apparatus housing (5).

8. Hand apparatus according to one of claims 2 to 7,
**characterised in that**
the pressure piston (22) is mounted displaceably in a forwardly open receiving chamber (23) of the oscillation part (6), wherein the filler mass (M) or the container (4) can be brought from the fore into the receiving chamber (23).

9. Hand apparatus according to claim 8,
**characterised in that**
the pneumatically drivable vibration generator (3) has an oscillation sleeve (27) mounted, so that it can oscillate, on the oscillation part (6), to which sleeve the pneumatic pressure of the inner chamber of the oscillation part (6) arranged behind the pressure piston (22) can be delivered.

10. Hand apparatus according to one of the preceding claims,
**characterised in that**
the vibration generator (3) is vibration-coupled at its one side with the container (4) and at its other side with a counter-vibration body (13).

11. Hand apparatus according to one of the preceding claims,
**characterised by**
setting means for adjusting the vibration energy to be transferred to the container (4).

12. Hand apparatus according to claim 11,
**characterised in that**
the setting means have a movably arranged control element (17), which is preferably arranged on the hand apparatus (1), in particular on the periphery of the forward region of the apparatus shaft (2).

## Revendications

1. Appareil à main (1) en particulier à usage dentaire, servant à distribuer une masse de remplissage (M) pâteuse, dont la viscosité peut être réduite en amenant de l'énergie vibratoire,
comportant un boîtier d'appareil (5),
comportant un réservoir (4) pour la masse de remplissage (M) pâteuse,
comportant une buse de sortie (11) reliée au réservoir (4),
comportant un générateur de vibrations (3),
et comportant des moyens de génération de pression (18) servant à exercer une pression sur la masse de remplissage (M) pâteuse,
le générateur de vibrations (3) pouvant fonctionner avec une pression pneumatique,
**caractérisé en ce**
**que** les moyens de génération de pression (18) présentent un piston de compression (22) pouvant être sollicité de manière pneumatique et ayant une action sur la masse de remplissage (M), et en ce qu'une alimentation en pression commune est prévue pour un générateur de vibrations (3) pouvant être entraîné de manière pneumatique et pour les moyens de génération de pression (18).

2. Appareil à main selon la revendication 1,
**caractérisé en ce**
**qu'**une pièce vibratoire (6) est disposée de manière couplée par vibration entre le contenant (4) et le générateur de vibrations (3).

3. Appareil à main selon la revendication 2,
**caractérisé en ce**
**que** la pièce vibratoire (6) est logée de manière axiale et/ou radiale ou de manière à pouvoir vibrer spatialement dans le boîtier d'appareil (5).

4. Appareil à main selon la revendication 2 ou 3,
**caractérisé en ce**
**que** la pièce vibratoire (6) présente un espace de logement (23) accessible depuis l'avant pour le réservoir (4).

5. Appareil à main selon l'une quelconque des revendications 2 à 4,
**caractérisé en ce**
**que** le réservoir (4) est relié de manière amovible à l'extrémité avant de la pièce vibratoire (6).

6. Appareil à main selon l'une quelconque des revendications 2 à 5,
**caractérisé en ce**
**que** le réservoir (4) est relié à la pièce vibratoire (6) par un assemblage par vis.

7. Appareil à main selon l'une quelconque des revendications 2 à 6,
**caractérisé en ce**
**que** la pièce vibratoire (6) dépasse vers l'avant du boîtier d'appareil (5).

8. Appareil à main selon l'une quelconque des revendications 2 à 7,
**caractérisé en ce**
**que** le piston de compression (22) est logé de manière à pouvoir être coulissé dans un espace de logement (23) ouvert vers l'avant de la pièce vibratoire (6), la masse de remplissage (M) ou le réservoir (4) pouvant être introduits depuis l'avant dans l'espace de logement (23).

9. Appareil à main selon la revendication 8,
**caractérisé en ce**
**que** le générateur de vibrations (3) pouvant être entraîné de manière pneumatique présente une douille vibratoire (27) logée de manière à pouvoir vibrer sur la pièce vibratoire (6), à laquelle peut être amenée la pression pneumatique de l'espace intérieur de la pièce vibratoire (6), disposé derrière le piston de compression (22).

10. Appareil à main selon l'une quelconque des revendications précédentes,
**caractérisé en ce**
**que** le générateur de vibrations (3) est couplé de manière vibratoire au réservoir (4) sur l'un de ses côtés et à un corps de contre-vibration (13) sur l'autre côté.

11. Appareil à main selon l'une quelconque des revendications précédentes,
**caractérisé par**
des moyens d'ajustage servant à ajuster l'énergie vibratoire à transmettre sur le réservoir (4).

12. Appareil à main selon la revendication 11,
**caractérisé en ce**
**que** les moyens d'ajustage présentent un élément de commande (17) disposé de manière mobile, lequel est disposé de préférence sur l'appareil à main (1), en particulier sur la périphérie de la zone avant de la tige d'appareil (2).
